# EUROPEAN PATENT SPECIFICATION

(11) **EP 0 922 429 B1**
(45) Date of publication and mention of the grant of the patent: **30.10.2002**
(21) Application number: 97904589.5
(22) Date of filing: 20.02.1997
(51) Int. Cl.: A47L 5/14, A47L 9/18, B08B 5/02

(54) **BLOWER AND VACUUM DEVICE**
BLAS- UND SAUGVORRICHTUNG
DISPOSITIF SOUFFLANT ET ASPIRANT

(30) Priority: 21.02.1996 US 604507; 28.08.1996 JP 24568996
(43) Date of publication of application: 16.06.1999
(73) Proprietor: RYOBI LTD., Fuchu-shi, Hiroshima 726 (JP); RYOBI NORTH AMERICA, INC., Easley, SC 29641 (US)
(72) Inventor: FUJIWARA, Nobuaki, Fuchu-shi, Hiroshima 726 (JP); KIKUCHI, Naoki, Chandler, AZ 85226 (US); EVERTS, Robert, G., Chandler, AZ 85224 (US)
(74) Representative: Senior, Alan Murray
(86) International application number: JP9700469
(87) International publication number: WO97030620

(56) References cited:
- EP-A- 0 792 578
- DE-U- 29 510 750
- DE-U- 29 519 900
- DE-U- 29 610 752
- JAPANESE UTILITY MODEL, Publication No. 25248/1994, (KOMATSU ZENOAH CO.), 6 July 1994.
- MICROFILM OF JAPANESE UTILITY MODEL, Application No. 099009/1979, (Laid-Open No. 17035/1981), (HIROSHI KAWARAZUKA), 14 February 1981.
- MICROFILM OF JAPANESE UTILITY MODEL, Application No. 125967/1990, (Laid-Open No. 80454/1992), (EAST JAPAN RAILWAY CO.), 14 July 1992.

## Description

### TECHNICAL FIELD

The present invention relates to a blower-vacuum apparatus, and more particularly, to a type thereof capable of switching between an air blowing blower mode and an air sucking vacuum mode.

### BACKGROUND ART

A conventional blower-vacuum apparatus is disclosed in U. S. patent No. 4,870,714. According to the disclosed apparatus, an air suction port and an air discharge port are formed in a main body, so that the air suction port is in confrontation with a fan disposed in the main body and the air discharge port is positioned perpendicularly with respect to an axis of the fan. In a vacuum mode, the air suction port is connected to a suction tube (vacuum nozzle) and the air discharge port is connected to a dust bag. By rotation of the fan, air and dust is introduced into the suction tube and directed into the dust bag through the main body. In the blower mode, the suction tube is detached from the air suction port, and a filter is attached to an open end of the air suction port for preventing dust from being introduced into the main body. Further, the dust bag is detached from the air discharge port, and an air blower tube (blower nozzle) having a tapered shape in which a diameter is gradually reduced toward its tip is connected to the air discharge port. Accordingly, air passing through the filter and introduced into the main body is blown outside through the air blower tube.

However, each time the blower-vacuum apparatus disclosed in the U. S. Patent 4,870,714 is switched between the vacuum mode and the blower mode, the suction tube and the filter must be exchanged and the dust bag and the air blower tube must be exchanged, which is troublesome.

Japanese Utility Model Application laid open publication No. Hei 4-80454 discloses a dust collecting apparatus in which a suction tube (vacuum nozzle) extending in a axial direction of a fan is connected to a main body, and an outlet tube extending in a direction perpendicular to the axis of the fan is connected to a dust bag through a joint. The joint is provided with a branch pipe to which a blower tube (blower nozzle) is connected through a rubber tube. A blower opening of the blower tube is positioned close to a suction opening of the suction tube. Air and dust introduced into the suction tube is directed into the dust bag through the main body, the outlet tube, and the joint. A part of the suction air is also directed to the blower tube through the branch pipe, so that the air is blown to a position close to the opening of the suction tube. Because of this air, rubbish and dust accumulated in indentations on the ground is blown out of the indentations to facilitate suction of the flying rubbish and dust into the suction tube.

However, the dust collecting apparatus disclosed in the laid open Utility Model Application publication No. Hei 4-80454 blows air during suction cleaning work so that a part of the suction air sucked through the suction tube is utilized for air blowing. Accordingly, the blowing air may contain dust, thereby lowering the dust-collecting efficiency of the device. Further, the device is not designed to operate in a blower mode only.

Japanese Utility Model laid open application publication No. Hei 3-92454 discloses a dust collecting apparatus in which one end of an air feed tube is connected to a blower and another end of the air feed tube is connected to a confluence tube which is connected to a dust bag. The confluence tube includes an air feed passage, a dust suction passage and a branch passage. Further, a pivotable change-over valve is provided in the confluence tube. The air feed passage approximately linearly connects the air feed tube and the dust bag. The dust suction passage branches off the air feed passage and has one end connected to a cleaning tube. The branch passage connects the air feed passage to the dust suction passage. In a vacuum mode, the change-over valve is pivotally moved to a position for closing an opening of the branch passage, so that the air from the blower is directed to the dust bag by way of the air feed tube, and the air feed passage. Because of this air flow, air in the dust suction passage is subjected to sucking, and therefore, the dust is sucked through the top end of the cleaning tube and is collected in the dust bag. In a blower mode, the change-over valve is pivotally moved to a position for closing an opening of the air feed passage, so that the air from the blower is directed to the cleaning tube by way of the air feed tube and the branch passage.

However, because the dust collection apparatus disclosed in the Japanese Utility Model Application publication No. Hei 3-92454 is designed to suck ambient air by flowing air, in comparison with the blower vacuum apparatus disclosed in U. S. Patent 4,870,714, in which suction can be exclusively performed, suction power will be inferior assuming that the dust collection apparatuses have power sources with identical output. Further, since the pivotable change-over valve is directly exposed in the passage, dust and rubbish may become entangled in the valve and render the change-over valve inoperable.

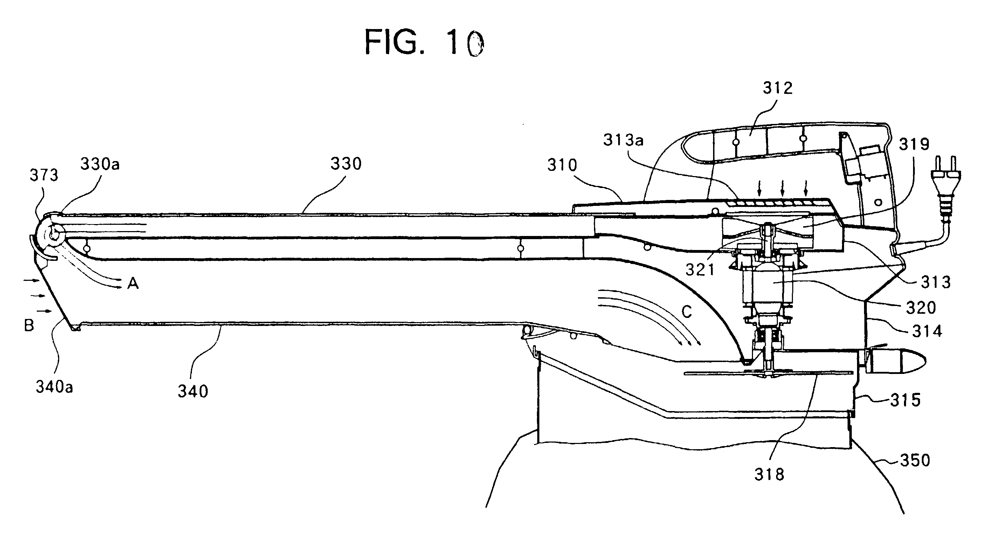

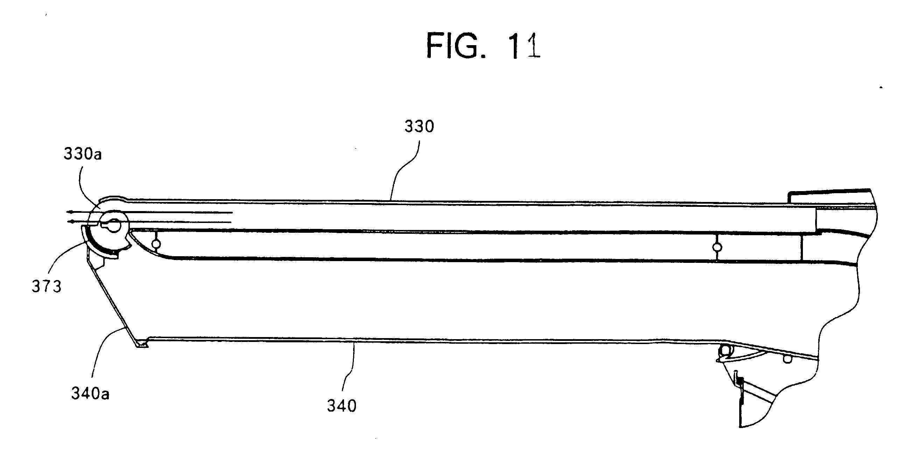

Another conventional blower vacuum apparatus is shown in Figs. 10 and 11. The apparatus includes a main body 310, a blower nozzle 330, and a vacuum nozzle 340. The main body 310 includes a fan case 313 accommodating a fan 319, a motor case 314 accommodating a motor 320, and a dust case 315 positioned below the motor case 314. A handle 312 is provided above the fan case 313. The fan case 313 has an upper wall in confrontation with the fan 319, and the upper wall is formed with grid like air inlet ports 313a. The dust case 315 is connected to a dust bag 350. The motor 320 has an output shaft 321 whose one end is connected to the fan 319. Another end of the output shaft 321 is connected to a cutter blade 318 positioned within the dust case 315.

The blower nozzle 330 extends in a direction perpendicular to the rotation axis of the fan 319, and has one end attached to the main body 310 and another end formed with an air blowing port 330a. The vacuum nozzle 340 extends in parallel with and integrally with the blower nozzle 330 and has one end attached to the main body 310 and another end formed with a suction port 340a. A change-over valve 373 is rotatably supported within the blower port 330a of the blower nozzle 330. The change-over valve 373 can be changed over between a vacuum mode position in which the valve shuts off the blower port 330a as shown in Fig. 15 and a blower mode position in which the valve opens the blower port 330a as shown in Fig. 11.

In the blower mode, if the change-over valve 373 is rotated to its blower mode position and the fan 319 is rotated, air is introduced into the fan case 313 through the grid like air inlet ports 313a formed at the upper wall of the fan case 313. The introduced air passes through the blower nozzle 330 and is blown outside out of the air blowing port 330a. In the vacuum mode, the change-over valve 373 is changed over to the vacuum mode position. However, similar to the blower mode, the rotation of the fan 319 introduces air into the fan case 313 through the air inlet ports 313a, and the introduced air passes through the blower nozzle 330 and is directed toward the air blowing port 330a. The air impinges on the change-over valve 373 and is turned reversely as indicated by an arrow A in Fig. 10. Thus, the air is fed into the vacuum nozzle 340. Because of the air stream, ambient air around the suction port 340a of the vacuum nozzle 340 is sucked because of the creation of negative pressure into the vacuum nozzle 340 as indicated by arrows B. Accordingly, dust can be sucked from the suction port 330a and the sucked dust is directed toward the cutter blade 318 as indicated by arrows C and is pulverized thereat, and is then collected in the dust collection bag 350.

However, in the conventional blower-vacuum apparatus shown in Fig. 10, powerful suction force cannot be provided, because suction of ambient air is achieved by the air stream similar to the dust collection apparatus described in the Japanese laid open Utility Model application publication No. Hei 3-92454. Further, dust may become entangled with the change-over valve rotatably supported at the air blowing port 330a so that change in operation mode may become difficult or impossible to perform.

DE 29510750 U1 discloses a suction/blower apparatus having a housing to which a blower nozzle and a vacuum nozzle are connected. A motor-driven impeller is located in the housing. The apparatus comprises a suction mode and a blowing mode. In the suction mode, air is sucked through the vacuum nozzle and is directed to a capture bag connection to which a capture bag can be connected. By switching-over a switch-over device the suction mode can be changed to the blowing mode. In the blowing mode, air is sucked through the vacuum nozzle to the housing and the air is directed by the switch-over device to the blower nozzle. The switch-over device comprises a valve sleeve which is pivotable around its own longitudinal axis. In the suction mode, the sucked air passes a through channel of the valve sleeve without being deflected by the valve sleeve. In the blowing mode, the sucked air enters an angled flow channel of the valve sleeve and is deflected within the valve sleeve into the blower nozzle.

It is therefore, an object of the present invention to provide a blower-vacuum apparatus capable of providing a strong suction force with a direct suction of air from a vacuum nozzle by rotation of a fan without utilization of suction of ambient air around the air stream, and capable of performing a smooth mode changing operation without adhesion or entanglement of dust in a change-over mechanism.

According to the present invention, there is provided a blower-vacuum apparatus comprising:
a main body;
a blower nozzle having one end connected to the main body and another end formed with a blower port;
a vacuum nozzle extending in parallel with and provided integrally with the blower nozzle, the vacuum nozzle having one end connected to the main body and another end formed with a suction port;
a fan rotatably supported in the main body;
a dust bag connected to the main body for receiving dust laden air which has passed through an entire length of the vacuum nozzle from the suction port and for collecting the dust;
wherein a change-over mechanism is provided in the main body for selectively providing one of a vacuum mode position in which the air sucked from the suction port is directed to the dust bag and a blower mode position in which the sucked air is directed to the blower nozzle, the air being directly sucked exclusively from the suction port during the vacuum mode by the rotation of the fan,
wherein the change-over mechanism comprises a change-over lever positioned outside of the main body and pivotally movably supported to the main body at its supporting portion, a shield member rotatably disposed in the main body and connected to the change-over lever for passing or blocking the sucked air, the shield member having a wall portion in confrontation with the supporting portion of the main body
and wherein the apparatus further comprises a guard member positioned in the main body and fixed thereto, characterised in that the guard member is positioned internally of the shield member and the wall portion being covered by the guard member for preventing the dust from being entered into a space between the wall portion and the supporting portion at which the change-over lever is supported;
a scroll shaped air passage is provided in the main body and runs from the vacuum nozzle to the change-over mechanism; and
the guard member has an arcuate deflection surface facing the air passage for smoothly introducing air into the change-over mechanism.

With this arrangement, ambient air is not sucked by the air stream, but air is directly sucked exclusively from the suction port of the vacuum nozzle upon rotation of the fan, and therefore sufficient suction force is provided. Further, fixedly held vacuum and blower nozzles are used during both the vacuum mode and blower mode. Accordingly, exchange in components is not required at every switching between the vacuum mode and the blower mode. Furthermore, since the vacuum mode operation is not performed concurrently with the blower mode operation but these operations are carried out independently of each other, the probability of mixing of dust with the blowing air can be reduced.

The blower port preferably has a cross-sectional area smaller than that of the suction port.

With the structure of the change-over mechanism, because the guard member is provided, change-over operation of the change-over mechanism is never obstructed by the entry of the dust into the change-over mechanism. Thus, change-over operations between the blower-mode and the vacuum mode can be smoothly performed. Because the cross-sectional area of the blower port is smaller than that of the suction port, air velocity blowing out of the blower nozzle during the blower mode is higher than air velocity sucked into the vacuum nozzle. Accordingly, leaves and large trash are blown away, and not sucked in through the suction port.

In the drawings:
Fig. 1 is a partially cross-sectional side view showing a blower-vacuum apparatus according to an embodiment of the present invention;
Fig. 2. Is a cross-sectional view showing the blower-vacuum apparatus in its vacuum mode according to the embodiment;
Fig. 3 is a cross-sectional view taken along the line III-III of Fig. 2;
Fig. 4 is a cross-sectional view showing the blower-vacuum apparatus in its blower mode according to the embodiment;
Fig. 5 is a cross-sectional view taken along the line V-V of Fig. 4;
Fig. 6 is an exploded perspective view showing an essential portion of the blower-vacuum apparatus according to the embodiment;
Fig. 7 is a partial side view showing a change-over mechanism in the blower-vacuum apparatus according to the embodiment;
Figs. 8A through 8C are views for description of operational order for locking the vacuum mode in the blower-vacuum apparatus according to the embodiment and in which:

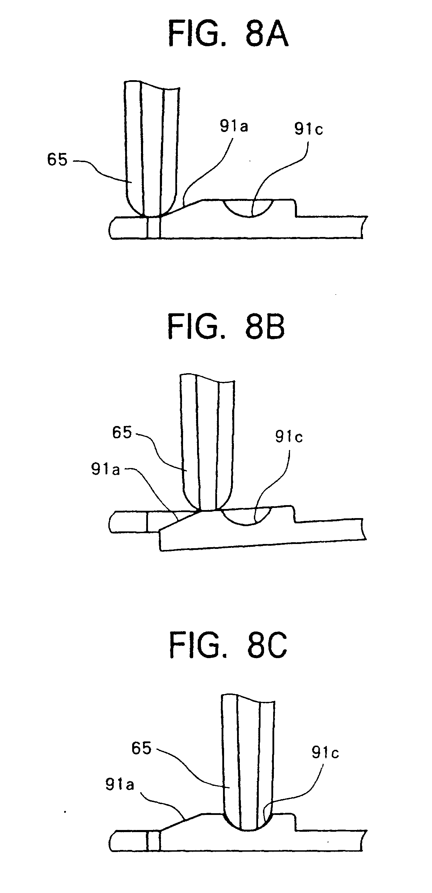

   Fig. 8A shows a state in which a projecting portion of a change-over lever is riding on a slanting portion of a resilient member;
   Fig. 8B shows a state in which the projecting portion has just climbed up a top of the resilient member; and
   Fig. 8C shows a state in which the projecting portion is brought into engagement with a recessed portion of the resilient member;

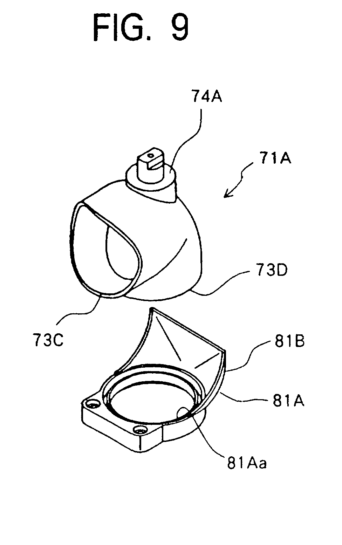

Fig. 9 is an exploded perspective view showing a shield member and a guard member used in a blower-vacuum apparatus according to an alternative to the embodiment of the present invention;
Fig. 10 is a cross-sectional view showing a conventional blower-vacuum apparatus in its vacuum mode; and
Fig. 11 is a cross-sectional view showing the conventional blower-vacuum apparatus in its blower mode.

### BEST MODE FOR CARRYING OUT THE INVENTION

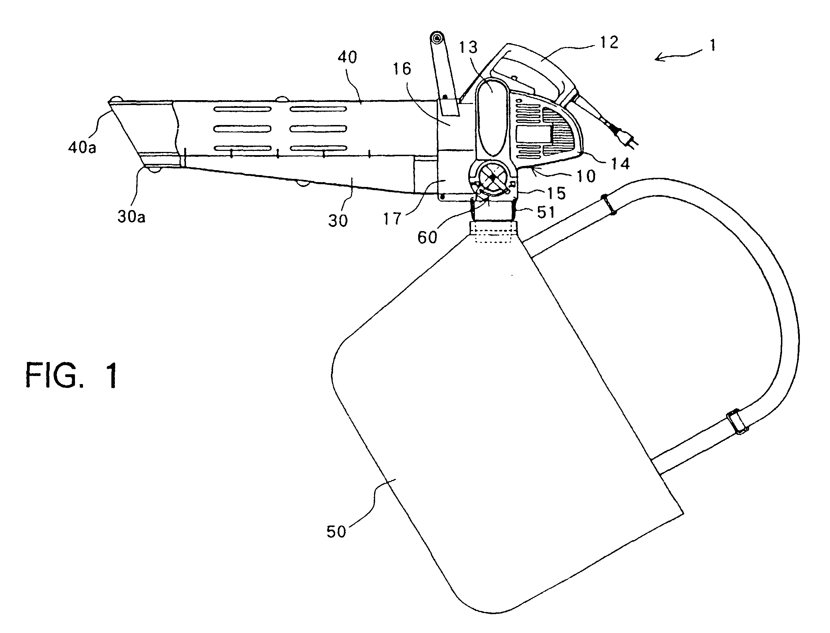

A blower-vacuum apparatus according to an embodiment of the present invention will be described with reference to Figs. 1 through 8. The blower-vacuum apparatus 1 includes a main body 10, a blower nozzle 30 connected to the main body 10, a vacuum nozzle 40, and a dust bag 50. The main body 10 has an upper portion provided with a handle 12 to which a power cord 11 is connected. The main body 10 integrally provides a fan case 13, a motor case 14 positioned behind the fan case 13, and a branch chamber 15 positioned below the fan case 13.

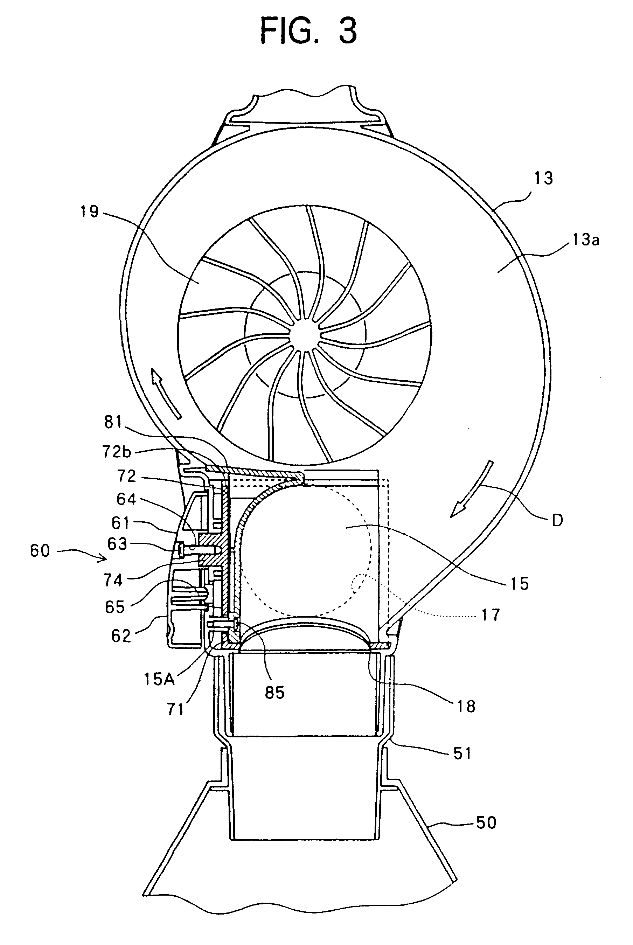

A suction collar 16 is provided in front of the fan case 13 for allowing a rear portion of the vacuum nozzle 40 to be inserted thereinto. Further, a blower collar 17 is provided in front of the branch chamber 15 for allowing a rear portion of the blower nozzle 30 to be inserted thereinto. The suction collar 16 and the blower collar 17 are arranged in vertical alignment. A dust port 18 is formed at a lower portion of the branch chamber 15. A fan 19 is rotatably disposed in the fan case 13, and a motor 20 is accommodated in the motor case 14. The motor has an output shaft 21 connected to the fan 19. The fan 19 has an acutely angled edge serving as a cutter, so that the fan can pulverize relatively large trash into small pieces when the trash passes through the fan 19. As shown in Fig. 3, a scrolled air passage 13a is formed between the fan 19 and the fan case 13 and running from the suction collar 16 to the branch chamber 15.

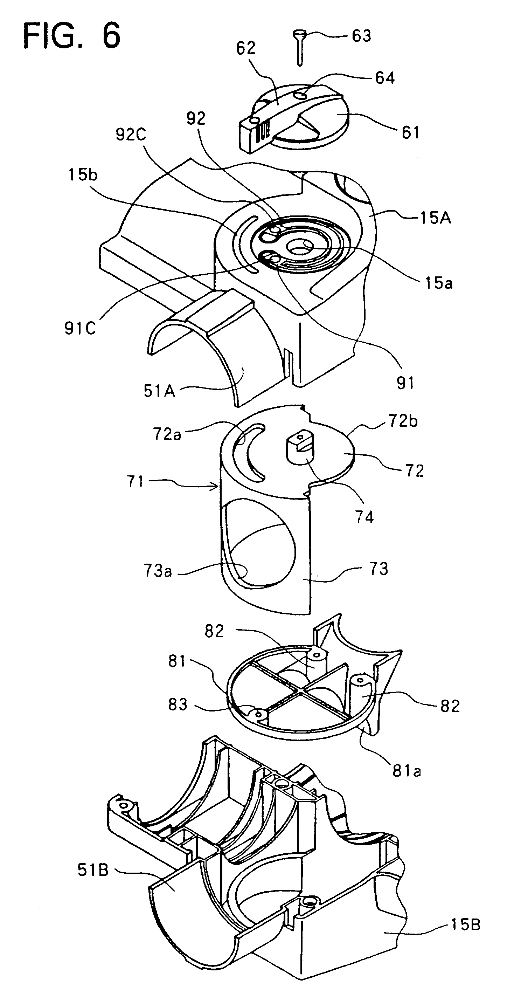

A front end of the blower nozzle 30 serves as a blower port 30a, and the rear end of the blower nozzle 30 is inserted into the collar 17. Further, the vacuum nozzle 40 is provided integrally with the blower nozzle 30 so as to extend parallel with the blower nozzle 30. A front end of the vacuum nozzle 40 serves as a vacuum port 40a, and the rear end of the vacuum nozzle is inserted into the collar 16. The blower nozzle 30 and the vacuum nozzle 40 have elongated configurations. The blower nozzle 30 is tapered such that a diameter thereof is gradually reduced toward the blower port 30a in order to increase air velocity blowing through the blower nozzle 30. On the other hand, the vacuum nozzle 40 has a constant diameter along its length. The dust port 18 of the branch chamber 15 is fitted with a dust nozzle 51 to which the dust bag 50 is connected. Incidentally, the main body 10 is constituted by complementary halves, and as shown in Fig. 6, the branch chamber 15 is divided into a right side branch chamber 15A and a left side branch chamber 15B, and the dust nozzle 51 is divided into a right side dust nozzle 51A and a left side dust nozzle 51B.

A change-over mechanism 60 is provided at the branch chamber 15. The change-over mechanism 60 primarily includes a change-over lever 61, a shield member 71, and a guard plate 81. The change-over lever 61 is rotatably supported to an outer side of the branch chamber 15. The lever 61 includes a knob portion 62 and is formed with a thread hole 64 through which a screw 63 extends. A projecting portion 65 (Fig. 8) protrudes toward a wall of the branch chamber 15 from a surface of the change-over lever 61, the surface being in confrontation with the wall of the branch chamber 15.

The branch chamber 15 is formed with a central opening 15a and an arcuate recess 15b concentric therewith. Further, a pair of arcuate resilient plates 91, 92 are provided concentrically with the central opening 15a and at symmetrical positions so as to equally subdivide the arcuate recess 15b. The arcuate recess 15b is adapted to enable a user to recognize the rotational limits of the knob portion 62 as shown in Fig. 1. Each resilient plate 91, 92 includes a slant surface 91a, 92a and a top portion 91b, 92b contiguous with the slant surface. Each top portion 91b, 92b is formed with a concave portion 91c, 92c with which a free end of the projecting portion 65 is resiliently engageable. A blower mode is entered when the projecting portion 65 is brought into engagement with the concave portion 91c upon rotation of the change-over lever 61, and a vacuum mode is entered when the projecting portion 65 and the concave portion 92c engage.

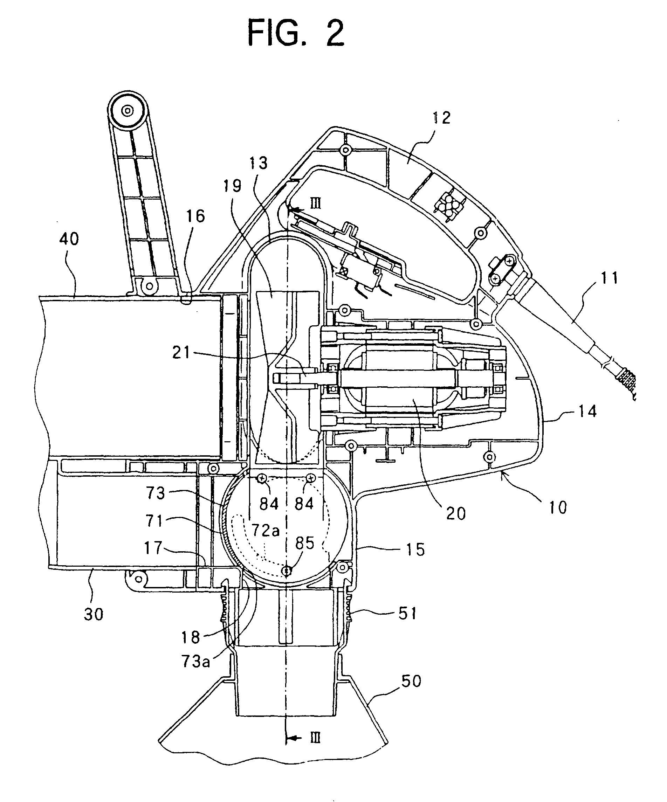

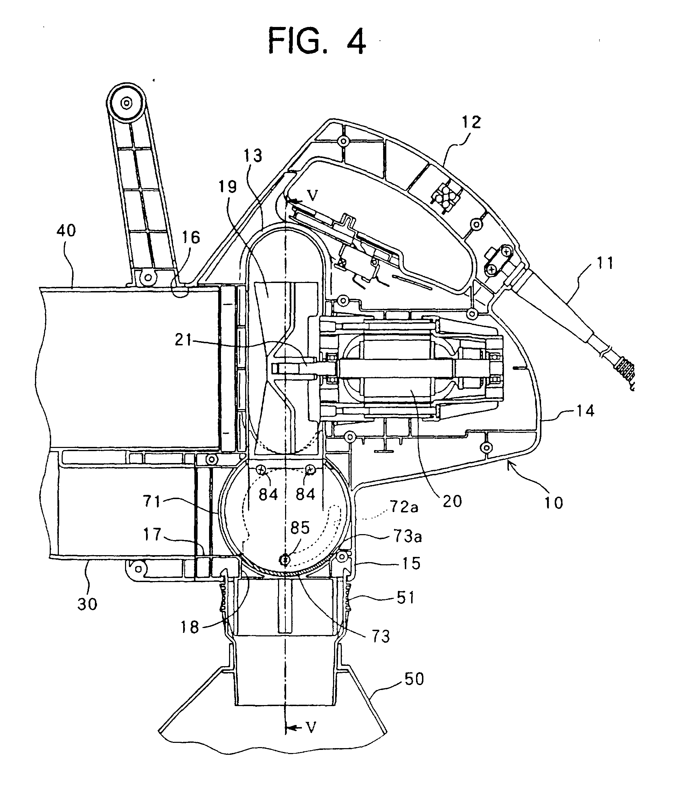

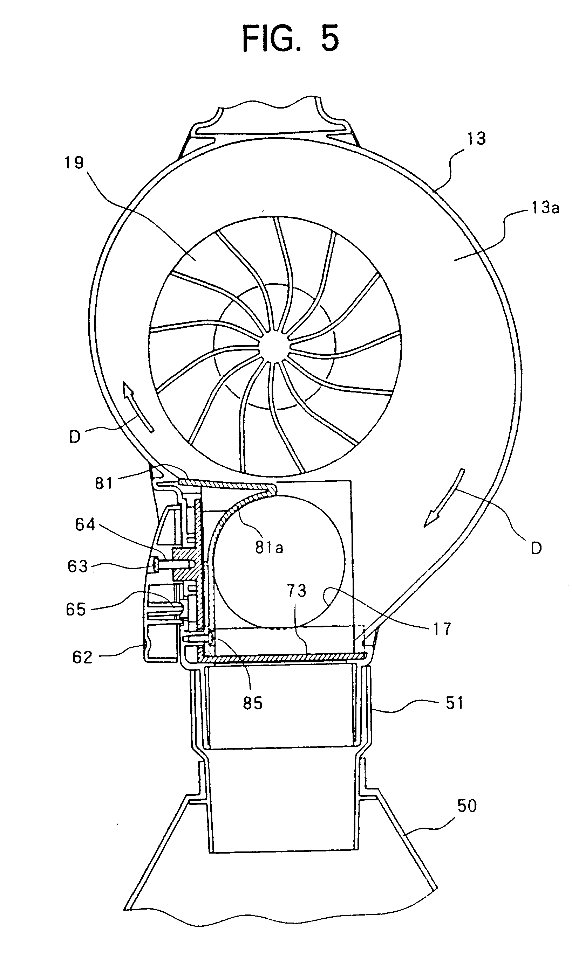

The shield member 71 is rotatably disposed within the branch chamber 15 and includes a top plate 72 and a shielding portion 73. The top plate 72 has a generally circular shape with a partially cut away portion, and is provided with a cylindrical protrusion 74 threadingly engaged with the screw 63 extending through the central opening 15a. The top plate 72 is formed with an arcuate slot 72a concentric with the cylindrical protrusion 74. Accordingly, the change-over lever 61 is integrally connected to the shield member 71 by means of the screw 63. The shielding portion 73 serves to shut off air stream, and has a hollow cylindrical shape with a partially cut away portion. Further, a circular opening 73a is formed in the cylindrical wall. The shielding member 71 can be switched between a vacuum mode position (Figs. 2 and 3) in which the shielding portion 73 shuts off the opening of the collar 17 and the circular opening 73a is in communication with the dust port 18, and a blower mode position (Figs. 4 and 5) in which the shielding portion 73 shuts off the dust port 18.

The guard plate 81 is positioned internally of the top plate 72 for covering a major surface and a peripheral edge portion 72b of the top plate 72. This arrangement can prevent dust contained in the air passing through the branch chamber 15 from being entered into a space between the top plate 72 and the wall of the branch chamber 15 and between the wall of the branch chamber 15 and the change-over lever 61. Therefore, change-over operation of the change-over lever will not be obstructed by dust. The guard plate 81 has a pair of threaded portions 82, 82 and a single threaded portion 83. A pair of screws 84, 84 extend through the wall of the branch chamber 15 and are threadingly engaged with the pair of treaded portions 82, 82. The screw 85 is threadingly engaged with the threaded portion 83, extends through the arcuate slot 72a, and is threadingly engaged with a threaded boss 15A provided at the wall of the branch chamber 15. Thus, the guard plate 81 is fixed to the branch chamber 15. The arcuate slot 72a is required, so that the screw 85 will not interrupt the rotation of the shield member 71. The guide plate 81 has a deflection surface 81a facing the air passage 13a of the fan case 13 for smoothly introducing air supplied from the air passage 13a into the branch chamber 15.

With this arrangement, in a state where the projecting portion 65 of the change-over lever 61 is engaged with the concave portion 92c, the vacuum mode is maintained where the shield member 71 is maintained at its vacuum mode position. That is, as shown in Figs. 2 and 3, the shielding portion 73 of the shield member 71 shuts off the opening of the cover 17 while the circular opening 73a is in communication with the dust port 18. With this state, if the motor 20 is energized upon turning ON a start switch not shown, the fan 19 is rotated, so that the air and dust are sucked through the suction port 40a of the vacuum nozzle 40 and are introduced into the fan case 13 where the dust pulverized by the fan 19. Then, the air and dust pass through the scrolled passage 13a and reach the branch chamber 15.

In this case, the deflection surface 81a of the guard plate 81 smoothly guide the air and the dust, and at the same time, dust can be prevented from entering into the space between the top plate 72 and the wall of the branch chamber 15 because the guard plate 81 covers the top plate portion 72 of the shield member 72. Thus, change-over operation of the change-over mechanism 60 can be maintained. Because the shielding portion 73 of the shield member 71 shuts off the opening of the collar 17, the sucked air and dust do not enter into the blower nozzle 30, but is smoothly introduced into the dust bag 50 through the circular opening 73a of the shield member 71, the dust port 18, and the dust nozzle 51.

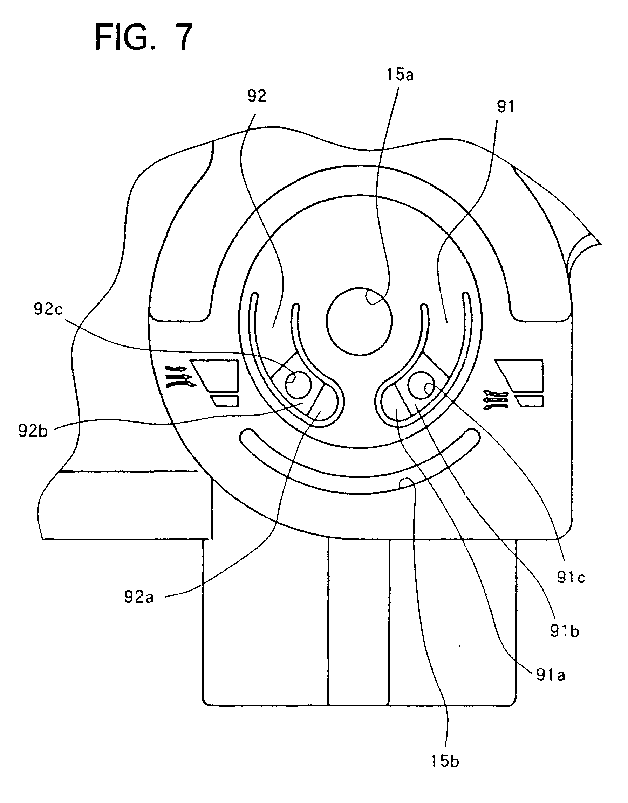

Next, if the knob portion 62 of the change-over lever 62 is rotated in a counterclockwise direction in Fig. 7 from the state where the projecting portion 65 of the change-over lever 61 engages the concave portion 92c, the free end of the projecting portion 65 is disengaged from the concave portion 92c and then, as shown in Figs. 8A through 8C, the free end of the projecting portion 65 gradually slides up and over the slant surface 91a and finally engages with the concave portion 91c. By this engagement, the blower mode is maintained. By the rotation of the change-over lever 61, the shield member 71 is also rotated within the branch chamber 15, so that its shielding portion 73 shuts off the dust port 18. In this state, the shielding portion 73 is not in confrontation with the opening of the collar 17. Thus, the fan case 13 is in communication with the blower nozzle 30 while the fan case 13 is out of communication with the dust bag 50.

With this state, if the motor 20 is energized, the fan 19 is rotated as in the vacuum mode, so that air is sucked through the suction port 40a of the vacuum nozzle 40 and introduced into the fan case 13. The sucked air passes through the scrolled passage 13a and reaches the branch chamber 15. The air is then introduced into the blower nozzle 30 through the opening of the collar 17, and is blown from the blower port 30a. Because air is sucked from the suction port 40a of the vacuum nozzle even during the blower mode, and therefore, there is a possibility that dust may be sucked in with the air. However, since the blower nozzle 30 has a tapered configuration in which its diameter gradually declines toward the blower port, air velocity blowing from the blower nozzle 30 is higher than air velocity sucked into the vacuum nozzle 40. Accordingly, large dust and the like will not be sucked in through the suction port 40a during the blower mode.

A blower-vacuum apparatus according to an alternative to the embodiment of the present invention will next be described with reference to Fig. 9. The alternative pertains to a modification to the shield member 71 and the guard plate 81 of the embodiment. Other configuration is identical with that of the embodiment. That is, in the alternative a shield member 71A is an L-shaped bending tube having one end formed with an opening 73C selectively communicable with one of the opening of the collar 17 and the dust port depending upon the rotation of the change-over lever 61, and having another end formed with an opening 73D which is normally open to the scrolled air passage 13a. A protrusion 74A protrudes from the bending portion so that the shield member is connected to the change-over lever 61. Further, the guard member 81A is fixed to the left side branch chamber 15B by means of a screw not shown. The guard member 81A is formed with an opening 81Aa through which the other open end 73D passes. The guard member 81A provides a guard plate 81B which covers the shield member 71A. The guard plate 81B prevents the dust contained in the air in the branch chamber 15 from entering into the protruding portion 74A and degrading rotational movement of the shield member 71A.

The present invention is not limited to the above described embodiment, but various changes and modifications may be made therein without departing from the scope of the invention. For example, according to the embodiment described, air sucked from the suction port 40a of the vacuum nozzle 40 is introduced into the blower nozzle 30 by the change-over mechanism 60 in the blower mode. However as a modification, a rotation axis of the fan is directed perpendicular to the longitudinal direction of the vacuum nozzle 40 and the blower nozzle 30, and a fan is disposed at an upper portion of a fan case and an air inlet port is formed at the upper portion of the fan case. Further, a change-over mechanism is provided for opening and closing the air inlet port and for opening and closing the vacuum nozzle. In the blower mode, while the vacuum nozzle is closed and the air inlet port is opened by the change-over mechanism, the air is sucked through the air inlet port by the rotation of the fan and the sucked air is introduced into the blower nozzle. With this arrangement, suction of dust from the suction port of the vacuum nozzle can be avoided in the blower mode.

Further, as a modification to the shield member 71 in the described embodiment, an annular rib outwardly protruding from the peripheral surface of the shielding portion can be integrally formed around a contour of the circular opening 73a, and the annular rib may be provided engageably with the dust port 18 or the collar 17 because of resilient deformation. With such a structure, leakage of dust can be eliminated.

Furthermore as a modification to the guard member 81 in the described embodiment, a skirt-like sleeve portion can be provided to avoid scattering of the dust toward any portion in the apparatus. More specifically in the guard member 81 shown in Fig. 6, a skirt-like sleeve portion is integrally suspended from the generally circular edge portion of the guard member, so that the cylindrical shielding portion 73 of the shield member 71 surrounds the skirt-like sleeve portion. Further, the skirt portion is formed with a pair of circular holes having shapes in conformance with the circular opening 73a of the shield member 71, the pair of circular holes being displaced by 90 degrees to each other in a circumferential direction of the skirt portion so as to secure fluid passage directing to either the dust bag 50 or the blower nozzle 30 in accordance with the change-over operation of the shield member 71. With this arrangement, the skirt portion serves as a blocking wall which prevents the dust from directly impinging against the wall of the branch chamber 15, and as a result, dust can be prevented from scattering around in the apparatus.

Moreover, in this case, the skirt portion can be formed integrally with outwardly projecting annular ribs around the pair of circular holes. With this arrangement, the shield member 71 is rotatingly moved while sliding over end faces of the annular ribs, that is, a gap with a distance corresponding to the protruding length of the annular ribs is provided between the shield member 71 and the skirt-like sleeve portion. Accordingly, even if dust enters between the skirt-like sleeve portion and the shield member, damage to the sliding surface can be reduced and dust removal work can be facilitated. This is an advantage of the skirt-like sleeve portion having annular ribs over the direct sliding arrangement in which the inner peripheral surface of the shield member is in direct contact with the outer peripheral surface of the skirt like sleeve due to the non provision of the annular ribs.

### INDUSTRIAL APPLIABILITY

As described above, the blower-vacuum apparatus according to the present invention is particularly advantageous in removing leaves, twigs, grass clippings and other organic accumulation from the surface of lawns and patios, while providing excellent portability and operability.

## Claims

1. A blower-vacuum apparatus comprising:
a main body (10) ;
a blower nozzle (30) having one end connected to the main body (10) and another end formed with a blower port (30a);
a vacuum nozzle (40) extending in parallel with and provided integrally with the blower nozzle (30), the vacuum nozzle (40) having one end connected to the main body (10) and another end formed with a suction port (40a);
a fan (19) rotatably supported in the main body (10);
a dust bag (50) connected to the main body (10) for receiving dust laden air which has passed through an entire length of the vacuum nozzle (40) from the suction port and for collecting the dust;
wherein a change-over mechanism (60) is provided in the main body (10) for selectively providing one of a vacuum mode position in which the air sucked from the suction port (40a) is directed to the dust bag (50) and a blower mode position in which the sucked air is directed to the blower nozzle (30), the air being directly sucked exclusively from the suction port (40a) during the vacuum mode by the rotation of the fan (19),
wherein the change-over mechanism (60) comprises a change-over lever (61) positioned outside of the main body (10) and pivotally movably supported to the main body (10) at its supporting portion, a shield member (71) rotatably disposed in the main body (10) and connected to the change-over lever (61) for passing or blocking the sucked air, the shield member (71) having a wall portion in confrontation with the supporting portion of the main body (10)
and wherein the apparatus further comprises a guard member (81) positioned in the main body (10) and fixed thereto, **characterised in that** the guard member (81) is positioned internally of the shield member (71) and the wall portion being covered by the guard member (81)for preventing the dust from being entered into a space between the wall portion and the supporting portion at which the change-over lever (61) is supported;
a scroll shaped air passage (13a) is provided in the main body (10) and runs from the vacuum nozzle (40) to the change-over mechanism (60); and
the guard member (81) has an arcuate deflection surface (81a) facing the air passage (13a) for smoothly introducing air into the change-over mechanism (60).

2. The blower-vacuum apparatus as claimed in claim 1, wherein the blower port (130a) has a cross-sectional area smaller than that of the suction port (140a).

## Patentansprüche

1. Eine Blas-Saugvorrichtung, die umfasst:
einen Hauptkörper (10);
eine Blasdüse (30), wobei ein Ende der Blasdüse mit dem Hauptkörper (10) verbunden ist und ein anderes Ende der Blasdüse mit einer Blasöffnung (30a) ausgebildet ist;
eine Saugdüse (40), die sich parallel zu der Blasdüse (30) erstreckt und integral mit dieser bereitgestellt ist, wobei ein Ende der Saugdüse (40) mit dem Hauptkörper (10) verbunden ist und ein anderes Ende der Saugdüse (40) mit einer Ansaugöffnung (40a) ausgebildet ist;
ein Gebläse (19), das drehbar in dem Hauptkörper (10) gehalten ist;
einen Staubbeutel (50), der mit dem Hauptkörper (10) zum Empfangen von staubbeladener Luft, die von der Ansaugöffnung durch eine gesamte Länge der Saugdüse (40) hindurchgetreten ist, und zum Sammeln des Staubs verbunden ist;
wobei ein Wechselmechanismus (60) in dem Hauptkörper (10) angeordnet ist zum selektiven Bereitstellen einer Position, die aus einer Saugmodusposition, bei der die Luft, die von der Ansaugöffnung (40a) angesaugt wird, zu dem Staubbeutel (50) geleitet wird, und einer Blasmodusposition ausgewählt ist, bei der die angesaugte Luft zu der Blasdüse (30) geleitet wird, wobei die Luft während des Saugmodus durch die Drehung des Gebläses (19) direkt ausschließlich von der Ansaugöffnung (40a) angesaugt wird,
wobei der Wechselmechanismus (60) einen Wechselhebel (61), der außerhalb des Hauptkörpers (10) positioniert und an seinem Halteabschnitt schwenkend bewegbar an dem Hauptkörper (10) gehalten ist, und ein Schildelement (71) umfasst, das drehbar in dem Hauptkörper (10) angeordnet und mit dem Wechselhebel (61) zum Hindurchlassen oder Blockieren der angesaugten Luft verbunden ist, wobei das Schildelement (71) einen Wandabschnitt aufweist, der dem Halteabschnitt des Hauptkörpers (10) gegenüberliegt,
und wobei die Vorrichtung ferner ein Schutzelement (81) umfasst, das in dem Hauptkörper (10) positioniert und daran fixiert ist, **dadurch gekennzeichnet, dass** das Schutzelement (81) bezüglich des Schildelements (71) innen angeordnet ist und dass der Wandabschnitt von dem Schutzelement (81) bedeckt ist, und zwar zum Verhindern, dass Staub in einen Raum zwischen dem Wandabschnitt und dem Halteabschnitt eindringt, an dem der Wechselhebel (61) gehalten ist;
dass ein spiralförmiger Luftdurchgang (13a) in dem Hauptkörper (10) bereitgestellt ist und von der Saugdüse (40) zu dem Wechselmechanismus (60) verläuft; und
dass das Schutzelement (81) eine gekrümmte Ablenkungsoberfläche (81a) aufweist, die in Richtung des Luftdurchgangs (13a) ausgerichtet ist, und zwar zum sanften Einführen von Luft in den Wechselmechanismus (60).

2. Blas-Saugvorrichtung nach Anspruch 1, bei der die Blasöffnung (130a) eine Querschnittsfläche aufweist, die kleiner ist als die Querschnittsfläche der Saugöffnung (140a).

## Revendications

1. Appareil soufflant et aspirant comprenant :
un corps principal (10) ;
une buse de soufflage (30) ayant une extrémité connectée au corps principal (10) et une autre extrémité munie d'un orifice de soufflage (30a) ;
une buse d'aspiration (40) s'étendant parallèlement et d'un seul tenant avec la buse de soufflage (30), la buse d'aspiration (40) ayant une extrémité connectée au corps principal (10) et une autre extrémité munie d'un orifice de succion (40a) ;
un ventilateur (19) supporté à rotation dans le corps principal (10) ;
un sac à poussière (50) connecté au corps principal (10) pour recevoir l'air chargé de poussière qui a parcouru toute une longueur de la buse d'aspiration (40) depuis l'orifice de succion et pour recueillir la poussière ;
dans lequel un mécanisme de changement de marche (60) est prévu dans le corps principal (10) pour fournir de manière sélective soit une position de mode d'aspiration dans laquelle l'air aspiré par l'orifice de succion (40a) est envoyé dans le sac à poussière (50), soit une position de mode de soufflage dans laquelle l'air aspiré est dirigé vers la buse de soufflage (30), l'air étant directement aspiré exclusivement par l'orifice de succion (40a) pendant le mode d'aspiration par la rotation du ventilateur (19),
dans lequel le mécanisme de changement de marche (60) comprend un levier de changement de marche (61) placé à l'extérieur du corps principal (10) et supporté de manière mobile et à pivotement sur le corps principal (10) au niveau de sa partie de support, un élément formant bouclier (71) placé à rotation dans le corps principal (10) et connecté au levier de changement de marche (61) pour laisser passer ou bloquer l'air aspiré, l'élément formant bouclier (71) comportant une partie de paroi en confrontation avec la partie de support du corps principal (10),
et où l'appareil comprend en outre un élément protecteur (81) placé dans le corps principal (10) et fixé à ce dernier, **caractérisé en ce que** l'élément protecteur (81) est placé à l'intérieur de l'élément formant bouclier (71) et la partie de paroi étant recouverte par l'élément protecteur (81) pour empêcher la poussière d'entrer dans un espace compris entre la partie de paroi et la partie de support où le levier de changement de marche (61) est supporté ;
un passage d'air en forme de spirale (13a) est prévu dans le corps principal (10) et va de la buse d'aspiration (40) au mécanisme de changement de marche (60) ; et
l'élément protecteur (81) a une surface de déviation arquée (81a) tournée vers le passage d'air (13a) pour introduire en douceur de l'air dans le mécanisme de changement de marche (60).

2. Appareil soufflant et aspirant selon la revendication 1, dans lequel l'orifice de soufflage (130a) est de section plus petite que celle de l'orifice de succion (140a).
